# EUROPÄISCHE PATENTSCHRIFT

(11) **EP 1 436 184 B1**
(45) Veröffentlichungstag und Bekanntmachung des Hinweises auf die Patenterteilung: **23.03.2005**
(21) Anmeldenummer: 02785169.0
(22) Anmeldetag: 07.10.2002
(51) Int. Cl.: B60T 17/22, B60T 8/40, B60T 13/68

(54) **VERFAHREN ZUR ÜBERWACHUNG EINER ELEKTROHYDRAULISCHEN FAHRZEUGBREMSANLAGE**
METHOD FOR MONITORING AN ELECTROHYDRAULIC VEHICLE BRAKING SYSTEM
PROCEDE DE SURVEILLANCE D'UN SYSTEME DE FREINAGE ELECTRO-HYDRAULIQUE DE VEHICULE

(30) Priorität: 12.10.2001 DE 10150583; 26.09.2002 DE 10244762
(43) Veröffentlichungstag der Anmeldung: 14.07.2004
(73) Patentinhaber: Continental Teves AG & Co. OHG, 60488 Frankfurt am Main (DE)
(72) Erfinder: BUSCHMANN, Gunther, 65510 Idstein (DE); SCHMIDT, Robert, 56477 Rennerod (DE); ULLRICH, Thorsten, 64579 Gernsheim (DE)
(86) Internationale Anmeldenummer: PCT/EP2002/011222
(87) Internationale Veröffentlichungsnummer: WO 2003/033324

(56) Entgegenhaltungen:
- WO-A-01/72568
- WO-A-99/41125
- DE-A- 19 603 867
- US-A- 5 767 397

## Beschreibung

Die Erfindung bezieht sich auf ein Verfahren zur Überwachung einer elektrohydraulischen Fahrzeugbremsanlage im Hinblick auf eine Anreicherung der in ihr vorhandenen Bremsflüssigkeit mit einem Gas, wobei die Bremsanlage einen Druckspeicher mit Bremsflüssigkeit und wenigstens eine mit einem Lüftspiel veränderlicher Größe behaftete hydraulische Radbremse aufweist, wobei zur Bestimmung der Gasanreicherung die Radbremse mit dem Druckspeicher verbunden wird, wodurch dort ein Bremsdruck erzeugt wird, mit den folgenden Schritten: (1) Bestimmung des Druckes in der Radbremse; (2) Bestimmung der Volumenaufnahme der Radbremse; (3) Vergleich der Volumenaufnahme mit einer auf den Radbremsdruck bezogenen Bewertungsgrenze, wobei bei Überschreiten der Bewertungsgrenze ein Warnsignal erzeugt wird.

In der DE 100 60 225 A1 ist ein derartiges Verfahren beschrieben, bei dem bei einer Bremsung sowohl der Radbremsdruck als auch die Volumenaufnahme der Radbremsen bestimmt wird. Die ermittelten Werte werden mit einer zuvor festgelegten Bewertungsgrenze in einem p/V-Diagramm verglichen, wobei bei einem Überschreiten der Bewertungsgrenze ein Warnsignal erzeugt und ausgegeben wird.

Eine derartige Überwachung ist vor allem für eine elektrohydraulische Fahrzeugbremsanlage von eminenter Bedeutung: Im Laufe der Zeit reichert sich die Bremsflüssigkeit mit Gasen, z. B. Luft oder Wasserdampf an. Dies führt dazu, dass die an sich inkompressible Bremsflüssigkeit kompressibel wird. Dies wiederum hat zur Folge, dass zum Erreichen eines bestimmten Radbremsdruckes deutlich mehr Bremsflüssigkeit in die Bremsanlage gedrückt werden muss als das bei einer normalen Bremsflüssigkeit mit geringer Kompressibilität der Fall wäre. Bei einer Bremsanlage, bei der die Bremsflüssigkeit aus einem pedalbetätigten Hauptbremszylinder in die Radbremsen gedrückt wird, kann der Fahrer selbst feststellen, dass bei einer mit Luft oder Gasen belasteten Bremsflüssigkeit der Pedalweg größer und das Bremsgefühl insgesamt schwammiger wird. Diese Möglichkeit der "Überwachung" geht bei einer elektrohydraulischen Bremsanlage verloren. Bei einer solchen Bremsanlage werden nämlich die Radbremsen zum Aufbau eines Radbremsdruckes mittels Ventilen an einen Hochdruckspeicher angeschlossen. Durch eine geeignete Ansteuerung der Ventile lässt sich in den Radbremsen ein Druck entsprechend einem Fahrerwunsch aufbauen. Da im Hochdruckspeicher, der darüber hinaus auch noch mit Pumpen versehen ist, im Prinzip eine unbegrenzte Druckmittelmenge zur Verfügung steht, kann auch mit einer stark kompressiblen Bremsflüssigkeit ein hoher Bremsdruck aufgebaut werden, ohne dass der Fahrer durch ein sich änderndes Pedalgefühl auf die Anreicherung der Bremsflüssigkeit mit Luft aufmerksam gemacht werden würde.

Eine solche elektrohydraulische Bremsanlage hat zwar in der Regel ebenfalls einen Hauptbremszylinder, der aber normalerweise von den Radbremsen getrennt ist und der nur mit diesen verbunden wird, falls die Druckversorgung mittels des Hochdruckspeichers ausfällt. Außerdem wird der pedalbetätigte Hauptbremszylinder benötigt, um den Fahrerwunsch hinsichtlich einer bestimmten Fahrzeugverzögerung zu bestimmen. Dazu wird unter anderem die Kraft ermittelt, mit der das Bremspedal vom Fahrer betätigt wird.

Problematisch wird die Situation, wenn der elektrohydraulische Teil der Bremsanlage ausfällt und die Radbremsen hydraulisch mit dem Hauptbremszylinder in Verbindung gebracht werden, um in konventioneller Weise durch Betätigung des Bremspedals einen Bremsdruck aufzubauen. Das Volumen des Hauptbremszylinders wird dann nicht mehr ausreichen, um mit der kompressiblen Bremsflüssigkeit einen genügend hohen Bremsdruck aufzubauen. Der Hauptbremszylinder kann auch nicht beliebig vergrößert werden, da seine Länge durch den maximal möglichen Pedalweg und sein Durchmesser von der maximal vom Fahrer aufzubringenden Pedalkraft begrenzt ist.

Es ist daher dringend notwendig, eine elektrohydraulische Fahrzeugbremsanlage der oben genannten Art hinsichtlich der Kompressibilität der Bremsflüssigkeit, also insbesondere hinsichtlich einer Anreicherung der Bremsflüssigkeit mit Gas bzw. Luft zu überwachen.

Allerdings tritt bei einer Realisation eines Überwachungsmechanismus das folgende Problem auf: Die Volumenaufnahme wird bestimmt durch die Elastizitäten innerhalb der Fahrzeugbremse und der Zuleitungen. Diese sind spezifisch für die Bremsanlage eines bestimmten Fahrzeuges und unterliegen herstellungsmäßig bestimmten Toleranzen. Diese sind nicht sehr groß und können daher problemlos bei der Bestimmung der Bewertungsgrenze Berücksichtigung finden. Neben den Elastizitäten der Fahrzeugbremse liegt aber auch ein Lüftspiel vor, das ist der Weg, den die Betätigungsorgane einer Bremsanlage (z. B. die Bremskolben einer Scheibenbremsanlage) zurücklegen müssen, bevor überhaupt eine Bremswirkung einsetzt. Dieses Lüftspiel ändert sich laufend innerhalb eines relativ großen Bereiches. Dies hat unter anderem zwei Gründe. Zum einen arbeiten die Rückstellorgane, die nach einer Bremsung ein kleines Lüftspiel einstellen sollen, nicht exakt, zum anderen sind die Betätigungsorgane schwimmend gelagert, so dass Beschleunigungen des Fahrzeuges zu einer Verschiebung der Betätigungsorgane führen. So werden z. B. die Betätigungskolben einer Scheibenbremsanlage, die im allgemeinen quer zur Fahrzeuglängsachse angeordnet sind, durch hohe Quer-Beschleunigungskräfte von der Bremsscheibe weggezogen. Aber auch Erschütterungen des Fahrzeuges bei schlechten Straßenverhältnissen können zu einer Veränderung des Lüftspiels führen. Das sich daraus ergebende Lüftspiel wird als dynamisches Lüftspiel bezeichnet.

Die feststellbaren Veränderungen des Lüftspiels liegen dabei in der gleichen Größenordnung wie die Änderungen, die durch eine Luftbelastung entstehen. Bei einem Verfahren, bei dem die Volumenaufnahme bei einem bestimmten Bremsdruck gemessen wird, kann daher zunächst nicht unterschieden werden, ob diese Volumenaufnahme durch ein großes Lüftspiel oder durch einen starken Luft- oder Gaseintrag hervorgerufen worden ist.

Um Fehlwarnungen zu vermeiden, muss die Bewertungsgrenze so angesetzt werden, dass auch bei einem zufällig großen Lüftspiel keine Warnung erfolgt. Dies hätte aber zur Folge, dass das Verfahren relativ unempfindlich ist. Es kann vorkommen, dass eine hohe Luftbelastung nicht erkannt wird, weil ausgehend von einem geringen Luftspiel trotz hoher Luftbelastung die Bewertungsgrenze nicht erreicht wird.

Die Erfindung beruht somit auf dem Problem, ein Verfahren zu schaffen, das empfindlich genug arbeitet und Luftanreicherungen der Bremsflüssigkeit sicher erkennt, und bei dem trotzdem keine Fehlwarnungen ausgelöst werden.

Zur Lösung des Problems sieht die Erfindung vor, dass
(4) zuvor eine Abschätzung der Größe des aktuellen Lüftspiels erfolgt, das in oder außerhalb eines durch eine obere und eine untere Grenze markierten Normalbereiches liegt,
(5) das Verfahren zwei Bewertungsgrenzen kennt, nämlich eine obere Bewertungsgrenze, bei der ein Lüftspiel an der oberen Grenze des Normalbereiches berücksichtigt ist, und eine darunter liegende untere Bewertungsgrenze,
(6) bei einer aktuellen Größe des Lüftspiels im Normalbereich ein Warnsignal erzeugt wird, falls die Volumenaufnahme oberhalb der oberen Bewertungsgrenzen liegt, und
(7) bei einer aktuellen Größe des Lüftspiels an der unteren Grenze oder darunter, ein Warnsignal erzeugt wird, falls die Volumenaufnahme oberhalb der unteren Bewertungsgrenzen liegt und eine solche Situation wenigstens einmal unmittelbar zuvor aufgetreten ist.

Die Erfindung geht dabei von der folgenden Überlegung aus:
Das Lüftspiel bewegt sich im allgemeinen in einem Normalbereich, der im Wesentlichen durch die von Bremsung zu Bremsung unterschiedlich starke Rückstellung des Bremsbetätigungsorganes bestimmt ist. Hinzu kommen Verschiebungen des Betätigungsorgans im Sinne einer Vergrößerung oder Verkleinerung des Lüftspiels, wie sie bei üblicher Fahrweise auf asphaltierten Straßen auftreten. Auf diese Weise lässt sich eine obere Bewertungsgrenze definieren, bei der unterstellt wird, dass sich das Lüftspiel an der oberen Grenze des Normalbereichs befindet.

Des Weiteren lässt sich eine untere Bewertungsgrenze definieren, die betragsmäßig unter der oberen Bewertungsgrenze liegt und ein Lüftspiel berücksichtigt, das eher im unteren Bereich bzw. an der unteren Grenze des Normalbereiches liegt. Wird nun das Lüftspiel bestimmt bzw. abgeschätzt, so kann, solange das aktuelle Lüftspiel im Normalbereich liegt, die obere Bewertungsgrenze zum Vergleich mit der gemessenen, auf einen bestimmten Radbremsdruck bezogenen Volumenaufnahme herangezogen werden.

Ergibt die Abschätzung, dass das Lüftspiel eher an der unteren Grenze oder sogar darunter liegt, wird zum Vergleich der aktuellen Volumenaufnahme die untere Bewertungsgrenze herangezogen, wobei allerdings eine statistische Auswertung vorgenommen wird, d. h. ein Warnsignal nur dann ausgegeben wird, wenn diese Situation mehrmals hintereinander auftritt. Dies geschieht aus den folgenden Gründen:

Lüftspiele an der unteren Grenze entstehen nach einer Bremsung und werden insbesondere durch die Stärke der Rückstellung bestimmt. Diese unterliegt aber statistischen Schwankungen. In vereinzelt auftretenden Fällen wird die Rückstellung so groß sein, dass die untere Bewertungsgrenze auch, ohne dass die Bremsflüssigkeit mit Luft angereichert ist, überschritten wird. In den meisten Fällen wird aber die Rückstellung sich in einem mittleren Bereich bewegen, so dass die untere Bewertungsgrenze nur überschritten wird, wenn eine Luftanreicherung vorliegt.

Um Fehlwarnungen auszuschließen, weil die Rückstellung zufälligerweise relativ groß ausgefallen ist, ist vorgesehen, dass das Warnsignal nur ausgegeben wird, wenn die untere Bewertungsgrenze zweimal oder mehrmals hintereinander überschritten wird.

Die Erfindung sieht des Weiteren vor, dass für den Fall, dass die Abschätzung des Lüftspieles einen Wert oberhalb der oberen Grenze ergibt, auf ein Warnsignal verzichtet wird, auch wenn die Volumenaufnahme oberhalb der oberen Bewertungsgrenze liegen sollte. Diese Ausnahmebestimmung ermöglicht es, bei der Festlegung der oberen Bewertungsgrenze die Situation, dass sehr große Lüftspiele auftreten können, unberücksichtigt zu lassen.

Zur Abschätzung der Größe des Lüftspieles kann die Fahrdynamik des Fahrzeuges laufend überwacht werden, wobei ein Überschreiten eines Fahrdynamikgrenzwertes dahingehend interpretiert wird, dass ein Lüftspiel oberhalb des Normalbereiches vorliegt. Diese Fahrdynamikgrenzwerte können sich auch auf verschiedene Situationen beziehen, z. B. kann die Querbeschleunigung laufend überwacht werden. Bei hohen Querbeschleunigungen z. B. über 4 m/sec², die in der Regel nur bei extremer Kurvenfahrt auftreten und bei einer Normalfahrt vom Fahrer normalerweise vermieden werden, kann vermutet werden, dass sich ein hohes Lüftspiel eingestellt hat.

So lange keine hohen Querbeschleunigungen gemessen werden, wird davon ausgegangen, dass sich das Lüftspiel im normalen Bereich befindet.

Ein weiterer Grund für große Lüftspiele sind Erschütterungen des Fahrzeuges, die durch eine schlechte Wegstrecke erzeugt werden. Dies macht sich in starken Schwankungen der Raddrehzahl bemerkbar. Durch eine laufende Messung der Raddrehzahl lassen sich somit Rückschlüsse auf die Qualität der Wegstrecke ziehen. Auch hier lassen sich bestimmte Kriterien einführen, bei denen davon ausgegangen werden kann, dass mit hoher Wahrscheinlichkeit ein großes Lüftspiel vorliegt.

Ein durch solche Fahrdynamiksituationen verursachtes großes Lüftspiel wird natürlich nur so lange unterstellt, wie es nicht durch eine Bremsung, sei sie vom Fahrer ausgelöst oder automatisch durch das System verursacht, wieder auf einen Normalwert gebracht worden ist.

Unmittelbar nach einer Bremsung wird davon ausgegangen, dass das Lüftspiel im Bereich der unteren Grenze des Normalbereiches oder sogar darunter liegt, so dass eine entsprechende Abschätzung dem Verfahren zugrunde gelegt wird. In diesem Fall zählt, wie oben erläutert, die untere Bewertungsgrenze, d. h. diese muss zweimal oder mehrmals hintereinander überschritten werden, um auf eine erhöhte Luftanreicherung der Bremsflüssigkeit zu schließen.

Eine das Lüftspiel reduzierende Bremsung wird erst eingeleitet, wenn für einen gewissen Zeitraum keine Fahrdynamikwerte festgestellt werden, die oberhalb des Fahrdynamikgrenzwertes liegen. Auf diese Weise soll vermieden werden, dass innerhalb einer Kurvenfahrt oder auf einer schlechten Wegstrecke Bremsungen erfolgen, die zu einem unkontrollierten Zustand des Fahrzeuges führen könnten. Die Reduzierung des Lüftspieles soll vielmehr erst dann erfolgen, wenn diese außergewöhnliche Fahrsituation eindeutig vorüber ist.

Im Folgenden wird anhand eines Ausführungsbeispiels die Erfindung näher erläutert. Dazu zeigt
- Fig. 1: ein P/V-Diagramm,
- Fig. 2: die Übergänge zwischen verschiedenen Zuständen des Lüftspieles.

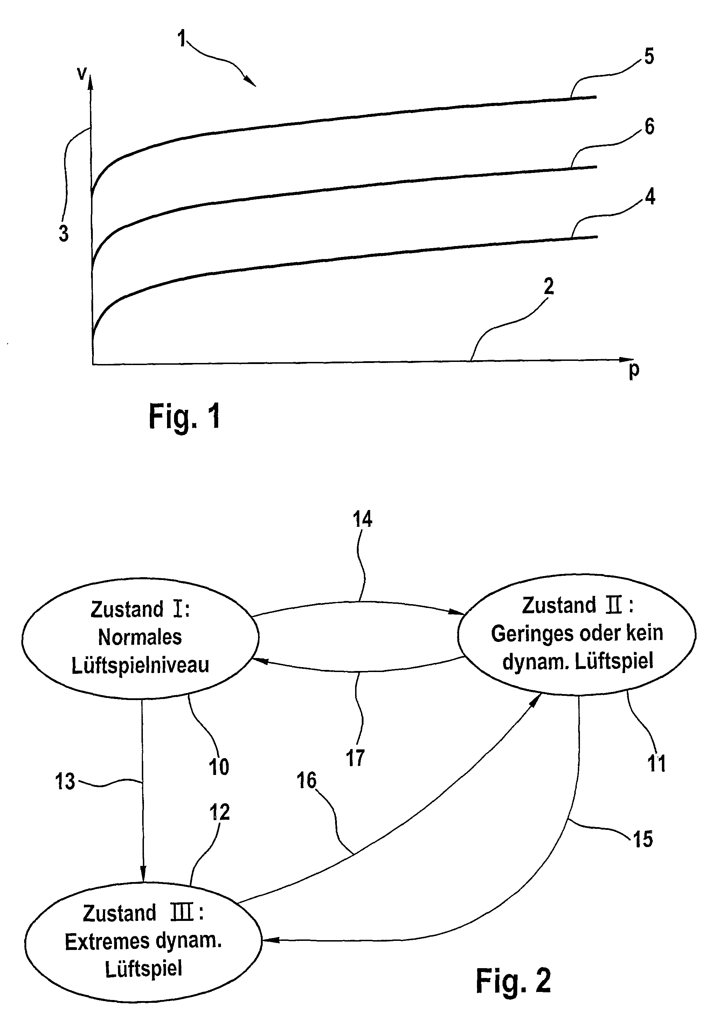

Zunächst wird auf die Figur 1 Bezug genommen. Diese zeigt ein P/V-Diagramm 1, wobei auf der X-Achse 2 der Radbremsdruck p und auf der Y-Achse 3 die Volumenaufnahme v der Radbremse dargestellt ist. Wenn in diesem Zusammenhang von einer Radbremse die Rede ist, ist das gesamte hydraulische System, beginnend von eigentlichen Bremsorganen bis zur Druckmittelquelle, gemeint. Die Volumenaufnahme dieses Systems resultiert daraus, dass dort elastische Bauteile vorhanden sind. So weitet sich z. B. die Bremsleitung bei Druckbelastung auf. Das gleiche gilt für einen Bremssattel. Da dieser den auf die Bremsscheibe wirkenden Druck abstützen muss, weitet er sich auf, wodurch sich die Druckmittelkammern hinter den Bremskolben vergrößern. Da diese Effekte vom Radbremsdruck abhängen, ergibt sich auch dann, wenn die Bremsflüssigkeit inkompressibel ist, eine bestimmte vom Radbremsdruck abhängige Volumenaufnahme. Die Volumenaufnahme wird nochmals vergrößert, wenn die Bremsflüssigkeit aufgrund von Anreicherungen mit Luft oder Gasen kompressibel wird, also bei Druckbelastung ihr Volumen verkleinert.

Dementsprechend zeigt das P/V-Diagramm der Figur 1 eine Normalkurve 4, bei der die zu erwartenden Toleranzschwankungen hinsichtlich der Elastizität innerhalb der Bremsanlage berücksichtigt sind.

Eine obere Kurve entspricht einer oberen Bewertungsgrenze 5, bei der zusätzlich zu den Toleranzen, wie sie in der Normalkurve 4 berücksichtigt sind, auch ein maximales Lüftspiel innerhalb eines Normalbereiches berücksichtigt ist. Außergewöhnliche Lüftspiele, die außerhalb des Normalbereiches liegen, wie sie durch außergewöhnliche Umstände, wie hohe Querbeschleunigungen des Fahrzeuges bei Kurvenfahrt oder starke Erschütterungen des Fahrzeuges bei einer Schlechtwegstrecke hervorgerufen werden, sind hier nicht berücksichtigt.

Eine mittlere Kurve zeigt eine unter Bewertungsgrenze 6, bei der ein mittleres Lüftspiel innerhalb des Normalbereiches Berücksichtigung gefunden hat.

Die Radbremse kann sich nun entsprechend der Abbildung 2 in verschiedenen Zuständen befinden. Zustand I (markiert durch den Kreis 10) ist durch ein normales Lüftspiel-Niveau charakterisiert. Zustand II ist durch ein geringes oder kein dynamisches Lüftspiel charakterisiert (Kreis 11) und Zustand III durch ein extremes dynamisches Lüftspiel (Kreis 12).

Das Verfahren geht beim Start des elektrohydraulischen Bremssystems (z.B. Zündungsstart oder beim sogenannten Wecken durch andere Signalquellen) zunächst davon aus, dass sich die Bremsen im Zustand III befinden, d.h. ein Lüftspiel oberhalb des Normalbereichs vorliegt.

Diese Annahme ist notwendig, weil keine Informationen über mögliche Manipulationen des Lüftspielzustandes bei ausgeschaltetem Bremssystem vorliegen. Beispielsweise kann nach Wartungsarbeiten an der Bremse ein großes dynamisches Lüftspiel zurückbleiben.

Der Zustand III wird verlassen, wenn eine Fahrerbremsung oder ein aktiver Lüftspielabbau durch eine automatisch eingeleitete, kaum wahrnehmbare Bremsung durchgeführt worden ist. Es ist dann vom Lüftspielzustand II auszugehen (Übergang gemäß Pfeil 16).

Ausgehend vom Lüftspielzustand I führt eine Fahrerbremsung oder ein aktiver Lüftspielabbau ebenfalls zum Zustand II (Übergang gemäß Pfeil 14).

Da davon auszugehen ist, dass sich das Lüftspiel durch stets vorhandene Vibrationen wieder vergrößert, erfolgt der Übergang von Zustand II zu Zustand I gemäß Pfeil 17 nach Ablauf einer gewissen Zeit mit einer von Null verschiedenen Fahrgeschwindigkeit, respektive einer gewissen Anzahl von Radumdrehungen. Dieser Zustandsübergang erfolgt auch, wenn eine gewisse, aber noch nicht extreme Querbeschleunigung beobachtet wird.

Ausgehend von den Zuständen I oder II (Pfeile 13, 15) erfolgt ein Wechsel in den Zustand III, wenn bestimmte Fahrdynamik-Grenzwerte, beispielsweise ein Querbeschleunigungslimit, überschritten wurden oder extreme Schwankungen der Raddrehzahlen, die auf eine Schlechtwegfahrt hinweisen, beobachtet wurden.

Aufgrund der verschiedenen Übergänge gemäß den Pfeilen 13 bis 17, die jeweils durch eine Bewertung der laufend vorgenommenen Messung der Fahrdynamik erfolgt, kann eine Abschätzung des Lüftspieles hinsichtlich der drei Zustände erfolgen: Befindet sich das Lüftspiel im Zustand III, so erfolgt keine Überwachung der Luftanreicherung, dies allein deswegen, weil ein Überschreiten der oberen Grenzbewertungskurve entsprechend der oberen Bewertungsgrenze 5 auf eben dieses große vorliegende Lüftspiel zurückzuführen ist und nicht auf eine hohe Luftbelastung. Befindet sich dagegen das Lüftspiel im Zustand I, kann mit ziemlicher Sicherheit gesagt werden, dass das Überschreiten der oberen Bewertungsgrenze 5 bei einer Bremsung darauf zurückzuführen ist, dass die Bremsflüssigkeit mit Luft belastet ist. Es wird daher eine Warnung ausgegeben.

Diese Warnung kann ein optisches und akustisches Signal umfassen. Sie kann bei einem Überschreiten auch beinhalten, dass das Fahrzeug nach einer solchen Warnung nicht wieder in Betrieb genommen werden kann oder allenfalls in weit eingeschränktem Maße, so dass z. B. mit geringer Geschwindigkeit eine Werkstatt angefahren werden kann, bei der die Bremsflüssigkeit ausgewechselt werden kann.

Liegt der Zustand II vor, nämlich ein geringes oder kein dynamisches Lüftspiel, so wird die untere Bewertungsgrenze 6 zur Bewertung herangezogen. Ein Überschreiten dieser Bewertungsgrenze kann im Einzelfall darauf zurückzuführen sein, dass tatsächlich nach einer Fahrerbremsung oder einem aktiven Lüftspielabbau sich doch wieder ein relativ großes Lüftspiel eingestellt hat. Dies dürfte im statistischen Mittel allerdings relativ selten auftreten, so dass davon ausgegangen werden kann, dass ein häufigeres Auftreten der Überschreitung der unteren Bewertungsgrenze 6 letztlich auf eine Luftbelastung zurückzuführen ist, was wiederum eine entsprechende Warnung auslöst.

Das vorgestellte Verfahren hat den Vorteil, dass die übliche Sensorik verwendet werden kann. Üblicherweise besitzt eine elektrohydraulische Bremsanlage auch Möglichkeiten der Fahrdynamikkontrolle. Diese benötigt eine Information über die Querbeschleunigung des Fahrzeuges, die mit einem entsprechenden Sensor feststellbar ist.

Die elektrohydraulische Bremsanlage dient weiterhin dazu, eine ABS-Regelung durchzuführen. Hierfür werden Informationen über das Raddrehverhalten der Räder benötigt. Die dafür vorgesehenen Radsensoren sind allgemein bekannt und können dazu genutzt werden, um die Raddrehzahl und deren Schwankungen festzustellen.

Zur Steuerung der Anlage selbst sind verschiedene Drucksensoren vorgesehen. Diese messen auch unmittelbar den Druck in den Radbremsen.

Des Weiteren lässt sich die Volumenentnahme aus dem Speicher, dem die Volumenaufnahme der Radbremsen entspricht, unmittelbar messen oder durch geeignete Methoden, z. B. durch Überwachung der Schaltzeiten von Ventilen oder der Pumpenförderleistung, sehr genau abschätzen, so dass auch ermittelbar ist, wie groß das Bremsflüssigkeitsvolumen ist, das in die Radbremsen geleitet worden ist.

## Patentansprüche

1. Verfahren zur Überwachung einer elektrohydraulischen Fahrzeugbremsanlage im Hinblick auf eine Belastung der Bremsflüssigkeit mit Luft, wobei die Bremsanlage einen Druckspeicher mit Bremsflüssigkeit und wenigstens eine mit einem Lüftspiel veränderlicher Größe behaftete hydraulische Radbremse aufweist, wobei zur Bestimmung der Luftbelastung die Radbremse mit den Druckspeicher verbunden wird, wodurch dort ein Bremsdruck erzeugt wird, mit den folgenden Schritten:
(1) Bestimmung des Druckes in der Radbremse,
(2) Bestimmung der Volumenaufnahme der Radbremse,
(3) Vergleich der Volumenaufnahme mit einer auf den Radbremsdruck bezogenen Bewertungsgrenze, wobei bei Überschreiten der Bewertungsgrenze ein Warnsignal erzeugt wird;
**dadurch gekennzeichnet, dass**
(4) zuvor eine Abschätzung der Größe des aktuellen Lüftspiels erfolgt, das in oder außerhalb eines durch eine obere und eine untere Grenze markierten Normalbereiches liegt,
(5) das Verfahren zwei Bewertungsgrenzen kennt, nämlich eine obere Bewertungsgrenze, bei der ein Lüftspiel an der oberen Grenze des Normalbereiches berücksichtigt ist, und eine darunter liegende untere Bewertungsgrenze,
(6) bei einer aktuellen Größe des Lüftspiels im Normalbereich ein Warnsignal erzeugt wird, falls die Volumenaufnahme oberhalb der oberen Bewertungsgrenzen liegt, und
(7) bei einer aktuellen Größe des Lüftspiels an der unteren Grenze oder darunter ein Warnsignal erzeugt wird, falls die Volumenaufnahme oberhalb der unteren Bewertungsgrenzen liegt und eine solche Situation wenigstens einmal unmittelbar zuvor aufgetreten ist.

2. Verfahren nach Anspruch 1, **dadurch gekennzeichnet, dass** bei einer aktuellen Größe des Lüftspiels oberhalb der oberen Grenze kein Warnsignal erzeugt wird, auch wenn die Volumenaufnahme oberhalb der oberen Bewertungsgrenze liegt.

3. Verfahren nach Anspruch 1 oder 2, **dadurch gekennzeichnet, dass** die Fahrdynamik des Fahrzeuges laufend überwacht wird, wobei ein Überschreiten eines Fahrdynamikgrenzwertes dahingehend interpretiert wird, dass ein Lüftspiel oberhalb des Normalbereichs vorliegt.

4. Verfahren nach Anspruch 3, **dadurch gekennzeichnet, dass** die Querbeschleunigung des Fahrzeuges laufend gemessen wird, und dass ein Überschreiten eines Querbeschleunigungsgrenzwertes als ein Überschreiten des Fahrdynamikgrenzwertes interpretiert wird.

5. Verfahren nach Anspruch 3, **dadurch gekennzeichnet, dass** die Drehzahl des Fahrzeuges laufend gemessen wird und dass eine sich in einem bestimmten Zeitraum wiederholende starke Schwankung der Drehzahl als ein Überschreiten des Fahrdynamikgrenzwertes interpretiert wird.

6. Verfahren nach Anspruch 3, **dadurch gekennzeichnet, dass** für einen bestimmten Zeitraum nach einer Bremsung davon ausgegangen wird, dass sich das Lüftspiel an der unteren Grenze oder darunter befindet.

7. Verfahren nach einem der vorhergehenden Ansprüche, **dadurch gekennzeichnet, dass** bei einem festgestellten Lüftspiel oberhalb des Normalbereiches eine das Lüftspiel reduzierende Bremsung eingeleitet wird.

8. Verfahren nach Anspruch 7 , **dadurch gekennzeichnet, dass** die das Lüftspiel reduzierende Bremsung erst eingeleitet wird, wenn für einen gewissen Zeitraum keine Fahrdynamikwerte festgestellt werden, die oberhalb des Fahrdynamikgrenzwertes liegen.

## Claims

1. Method for monitoring an electrohydraulic braking system for vehicles in view of the enrichment of brake fluid with air, with the braking system including a pressure accumulator with brake fluid and at least one hydraulic wheel brake having a clearance of a variable quantity, wherein for determining the air burden the wheel brake is connected to the pressure accumulator, with the result that a braking pressure is produced therein by the following steps:
(1) determining the pressure in the wheel brake,
(2) determining the volume uptake of the wheel brake,
(3) comparing the volume uptake with an evaluation threshold related to the wheel brake pressure, and an alarm signal is triggered when the evaluation threshold is exceeded,
**characterized in that**
(4) initially the size of the current clearance is estimated which lies within or outside a normal range marked by a top and a bottom limit,
(5) the method knows two evaluation thresholds, i.e. a top evaluation threshold where a clearance is taken into consideration at the top limit of the normal range, and a bottom evaluation threshold lying thereunder,
(6) an alarm is triggered in the event of a current size of the clearance in the normal range if the volume uptake lies above the top evaluation thresholds, and
(7) an alarm is triggered in the event of a current size of the clearance at the bottom limit or thereunder, if the volume uptake lies about the bottom evaluation thresholds and such a situation has occurred at least once directly beforehand.

2. Method as claimed in claim 1,
**characterized in that** no alarm is triggered with a current size of the clearance above the top threshold, not even if the volume uptake is above the top evaluation threshold.

3. Method as claimed in claim 1 or 2,
**characterized in that** the driving dynamics of the vehicle is constantly monitored, and exceeding of a driving dynamics limit value is interpreted as a clearance prevailing above the normal range.

4. Method as claimed in claim 3,
**characterized in that** the lateral acceleration of the vehicle is constantly monitored, and **in that** exceeding of a lateral acceleration limit value is interpreted as exceeding of the driving dynamics limit value.

5. Method as claimed in claim 3,
**characterized in that** the rotational speed of the vehicle is constantly measured, and **in that** a great fluctuation of the rotational speed that repeats in a defined period is interpreted as exceeding of the driving dynamics limit value.

6. Method as claimed in claim 3,
**characterized in that** it is assumed for a defined period after a braking operation that the clearance is at a bottom limit or below.

7. Method as claimed in any one of the preceding claims,
**characterized in that** when a clearance above the normal range is detected, a braking operation for reducing the clearance is initiated.

8. Method as claimed in claim 7,
**characterized in that** the braking operation reducing the clearance is initiated only when no driving dynamics values lying above the driving dynamics limit value have been detected for a defined period.

## Revendications

1. Procédé à surveiller un système de frein d'automobile électrohydraulique en vue d'une charge d'air du liquide de frein, le système de frein comportant un accumulateur contenant du liquide de frein, et au moins un frein de roue hydraulique ayant un jeu d'air d'une valeur variable, le frein de roue étant relié à l'accumulateur pour déterminer la charge d'air, moyen par lequel une force de freinage sera produit au frein de roue, comportant des démarches comme suite :
(1) déterminer la force de freinage dans le frein de roue,
(2) déterminer l'augmentation de volume de la roue de frein,
(3) comparer l'augmentation de volume à une limite d'évaluation relative à la force de freinage de roue, un signal avertisseur étant produit aussitôt que la limite d'évaluation soit dépassé,
**caractérisé en ce**
(4) **que** la valeur du jeu d'air actuel se trouvant dedans ou dehors du normal défmi par une limite supérieure ou inférieure est évaluée d'abord,
(5) **que** le procédé connait deux limites d'évaluation, notamment une limite supérieure considérant un jeu à la limite supérieure du normal, et une limite d'évaluation inférieure plus faible que celle-ci,
(6) **qu'**en cas d'une valeur du jeu actuel un signal d'avertisseur est produit dans le normale si l'augmentation de volume est en amont des limites supérieures, et
(7) **qu'**en cas d'une valeur actuel du jeu d'air un signal d'avertisseur est produit à la limite inférieure ou par-dessous si l'augmentation de volume est en amont des limites inférieures et si une telle situation s'est présenté au moins une fois immédiatement auparavant.

2. Procédé selon la revendication 1, **caractérisé en ce qu'** un aucun signal avertisseur sera produit en cas d'une valeur actuelle du jeu d'air au-dessus de la limite supérieure, même que l'augmentation du volume soit en amont de la limite supérieure.

3. Procédé selon la revendication 1 ou 2, **caractérisé en ce que** la dynamique de roulement de la voiture est surveillée sans interruption, un dépassement d'une valeur limite de la dynamique de roulement étant interprété au fur et à mesure qu'un jeu d'air soit en amont du normal.

4. Procédé selon la revendication 3, **caractérisé en ce que** l'accélération transversale de la voiture est mesurée sans interruption et qu'un dépassement d'une valeur de limite d'accélération transversale est interprété comme dépassement de la valeur limite de la dynamique de roulement.

5. Procédé selon la revendication 3, **caractérisé en ce que** la vitesse de la voiture est mesurée sans interruption, et qu'une variation forte de la vitesse se répétant dans un certain intervalle sera interprétée comme dépassement de la valeur limite de la dynamique de roulement.

6. Procédé selon la revendication 3, **caractérisé en ce qu'**on procède pendant une période certaine après un freinage, que le jeu d'air se trouve à la limite inférieure ou par-dessous de laquelle.

7. Procédé selon l'une des revendications précédentes, **caractérisé en ce qu'** au cas d'un jeu d'air en amont du normal, un freinage réduisant le jeu d'air sera commencé.

8. Procédé selon la revendication 7, **caractérisé en ce que** le freinage réduisant le jeu d'air ne sera commencé qu'aucune valeurs de dynamique de roulement au dessus de la valeur limite de la dynamique de roulement soient déterminées pendant une certaine période.
